Europäisches Patentamt

European Patent Office

Office européen des brevets

(19)

(11) Numéro de publication : **0 243 267**
**B1**

## (12) FASCICULE DE BREVET EUROPÉEN

(45) Date de publication du fascicule du brevet :
03.01.90

(21) Numéro de dépôt : 87400922.8

(22) Date de dépôt : 22.04.87

(51) Int. Cl.⁵ : **F 16 F 1/36, B 60 G 11/12,
B 29 C 67/18**

(54) **Lame élastique de suspension d'un véhicule munie d'embouts.**

(30) Priorité : 25.04.86 FR 8606014
23.05.86 FR 8607382

(43) Date de publication de la demande :
28.10.87 Bulletin 87/44

(45) Mention de la délivrance du brevet :
03.01.90 Bulletin 90/01

(84) Etats contractants désignés :
AT BE CH DE ES FR GB GR IT LI LU NL SE

(56) Documents cités :
EP–A– 0 132 713
WO–A–86 /028 87
DE–A– 2 635 329
DE–A– 2 731 577
DE–U– 7 307 894
FR–A– 2 292 569
GB–A– 2 158 548
US–A– 3 968 958
PATENT ABSTRACTS OF JAPAN, vol. 6, no. 23 (M-111)[901], 10 février 1982; & JP-A-56 141 435 (CHUO HATSUJIYOU K.K.) 05-11-1981

(73) Titulaire : **BERTIN & CIE**
**Zone Industrielle Boîte postale 3**
**F-78373 Plaisir Cedex (FR)**

(72) Inventeur : **Carpentier, Jean-Claude**
**2 Allée des Violettes**
**Marell-le-Guyon F-78490 Montfort-l'Amaur (FR)**
Inventeur : **Michel, Bernard**
**1 Square Bernard Palissy**
**F-78330 Fontenay-le-Fleury (FR)**
Inventeur : **Sayers, Kenneth Herbert**
**16 rue de la Sablière**
**F-78120 Rambouillet (FR)**

(74) Mandataire : **Colas, Jean-Pierre et al**
**Cabinet de Boisse 37, avenue Franklin D. Roosevelt**
**F-75008 Paris (FR)**

Jouve, 18, rue St-Denis, 75001 Paris, France

## Description

L'invention concerne une lame élastique de suspension d'un véhicule comportant à ses extrémités des embouts munis de moyens de liaison aux roues.

On connaît du brevet EP-A-132 713 un objet constitué d'une tige et d'un organe de raccordement fixé sur une extrémité de la tige par enlacement de brins d'une fibre ou d'un ruban passant autour de l'organe et s'étendant axialement. Ces brins sont fixés sur la barre par des spires serrées d'un enroulement radial d'une autre fibre.

On connaît du brevet GB-A-2 158 548 une lame de suspension en matériau composite comprenant un manchon fixé sur une extrémité de la lame conformée complémentairement, au moyen d'une bande métallique qui l'enveloppe et dont les extrémités sont fixés à la lame par un organe de pinçage.

Appliqué à une lame composite à fibres longitudinales ce pinçage développe des contraintes de cisaillement susceptibles d'endommager la lame.

On connaît du brevet FR-A-2 516 455 une lame de suspension pour véhicule constituée d'un matériau composite à fibres longitudinales s'étendant sans coupure d'une extrémité à l'autre. Cette lame présente à ses extrémités un profil évolutif de section approximativement constante dont la largeur diminue de manière concomittante avec une augmentation d'épaisseur. Les moyens de liaison aux supports de roue sont constitués d'un insert métallique tubulaire comportant un siège sur lequel repose l'extrémité du pivot de fusée. La fixation de cet insert nécessite le perçage de la lame et par conséquent la coupure d'un certain nombre de fibres. Il est nécessaire en conséquence d'augmenter les dimensions de la lame pour tenir compte de l'affaiblissement dû à la pose de l'insert.

La demande international de brevet WO 86/02887 (publiée le 22-5-1986) remédie à cet inconvénient en proposant un dispositif destiné à relier la lame au support de roue, se présentant sous la forme d'une cage, constituée de deux flasques latéraux de forme trapézoïdale, dont la projection sur un plan horizontal est en forme de V tronqué portant à son extrémité le siège du pivot de fusée. Les deux flasques sont reliés par une barrette sur le bord inférieur de leurs extrémités libres et par un appui à la partie supérieure voisine du siège. L'extrémité de la lame est introduite entre la barrette et l'appui et vient s'encastrer entre les flasques. On prévoit éventuellement un collage entre la cage et l'extrémité de la lame. Comme la cage est maintenue dans un plan vertical par coincement entre la barrette et l'appui, il faut appliquer à l'extrémité de la cage une force verticale dirigée de bas en haut pour son maintien. Lorsque la lame de suspension est montée en place sur le véhicule, la contrainte à laquelle elle est soumise développe une force de direction convenable qui maintient la ou les cages en place.

Tant que la lame n'est pas fixée au véhicule, le maintien des cages est problématique. En outre la cage doit être usinée avec une bonne précision afin de s'adapter le mieux possible à l'extrémité de la lame pour éviter les jeux latéraux et verticaux préjudiciables à la bonne tenue dans le temps de la suspension.

La fabrication en série des lames de suspension en composite conduit à l'obtention de pièces dont les tolérances sont supérieures à l'épaisseur d'un joint de colle sur les dimensions des extrémités. Ces variations importantes excluent un usinage précis des cages devant s'y adapter.

L'embout tel que précédemment décrit est une pièce lourde et esthétiquement peu satisfaisante. La réalisation d'un embout plus léger en un matériau similaire à celui de la lame a été envisagé par exemple, du brevet JP-A-5 479 343. L'extrémité de la lame est usinée selon une surface cylindrique concave dans laquelle vient se loger partiellement une bague cylindrique qui est maintenue dans une armature en résine époxy. Un tel dispositif ne peut être utilisé avec des lames devant supporter à leurs extrémités un effet anti-dévers partiel ou total sans risquer d'arrachement et de délaminage de l'extrémité de la lame.

L'invention vise à pallier aux défauts précédemment signalés en réalisant une lame élastique dont les embouts permettent la compensation des variations dimensionnelles des extrémités de la lame et leur fixation définitive et indépendante des forces auxquelles ils sont soumis sans risque de délaminage de la lame.

La lame élastique de suspension selon l'invention, comportant à ses extrémités des embouts munis de moyens de liaison aux roues, constituée en un matériau composite à fibres longitudinales, s'étendant sans coupure d'un bout à l'autre, présentant au moins à ses extrémités un profil évolutif de section approximativement constante dont la largeur diminue de manière concomittante avec une augmentation d'épaisseur, est caractérisée en ce que chacun des embouts comprend, en combinaison, une bague cylindrique encastrée dans une encoche cylindrique concave formée à l'extrémité adjacente de la lame, pour relier ladite lame à une roue, l'axe de la bague étant perpendiculaire au plan de flexion de la lame, une enveloppe en forme de U pour maintenir la bague dans l'encoche cylindrique concave, cette enveloppe présentant des branches qui s'élargissent vers leur extrémité libre et qui sont appliquées sur les portions de forme correspondante des faces opposées de la lame, au voisinage d'une extrémité de celle-ci, et un boîtier rigide à quatre côtés définissant un volume intérieur trapézoïdal, les petites bases de deux côtés opposés étant adjacentes aux grandes bases des deux autres côtés, et ledit volume intérieur étant complémentaire de celui de l'extrémité de la lame, les branches latérales de l'enveloppe en forme de U étant retenues par ce boîtier de manière à être immobilisées longitudinalement sur la lame avec le boîtier.

Ainsi l'embout est fixé de manière que la partie évolutive correspondante de la lame s'y emboîte pour y être bloquée longitudinalement par double encastrement pour recevoir et répartir l'ensemble des efforts issus de la roue sans concentration de contrainte.

Les explications et figures, données ci-après à titre d'exemples, permettront de comprendre comment l'invention peut être réalisée.

Les figures 1 et 2 sont des vues schématiques respectivement en coupe selon un plan vertical et en plan d'une lame selon l'invention.

La figure 3 est une vue de côté partiellement arrachée d'un premier exemple de réalisation d'un embout de la lame selon l'invention.

La figure 4 est une vue de dessus de la figure 3.

La figure 5 est une vue en coupe selon V-V de la figure 3.

La figure 6 est une vue de dessus, partiellement arrachée d'un deuxième exemple de réalisation d'un embout de la lame selon l'invention.

La figure 7 est une vue de côté, partiellement arrachée, de la lame et de son embout selon la figure 6.

La figure 8 est une vue en coupe selon le plan de la figure, d'une partie VIII de la figure 7.

La figure 9 est une vue de côté partiellement arrachée, d'une lame et de son embout selon un troisième exemple de réalisation.

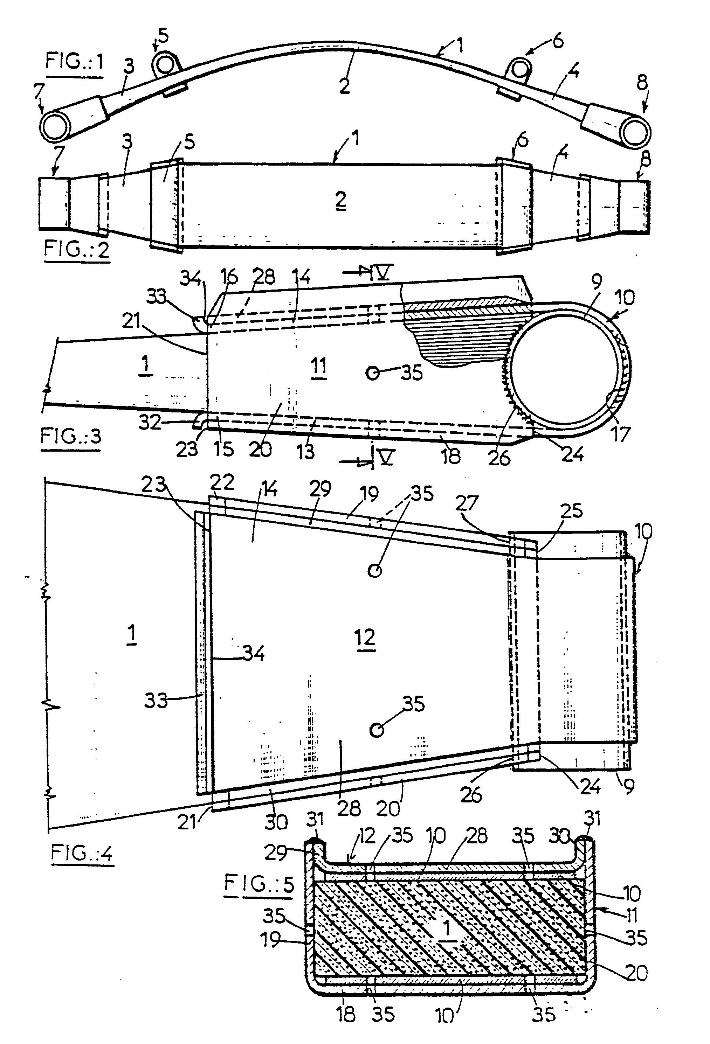

Les figures 1 et 2 représentent, vu de côté et de dessus, une lame élastique de suspension 1. La lame, comme décrite dans le brevet FR-A-2 516 455, est constituée d'un matériau composite formé de fibres minérales ou organiques s'étendant sans coupure d'un bout à l'autre de la lame et noyées dans un liant approprié. Cette lame présente une partie centrale 2 parallélépipédique raccordée à deux parties d'extrémité 3, 4 de forme évolutive présentant dans le plan horizontal (figure 2), une diminution de largeur concomittante avec une augmentation d'épaisseur dans le plan vertical (figure 1), la section restant approximativement constante.

On a figuré schématiquement la position des dispositifs de liaison 5, 6 de la lame de suspension 1 au châssis ainsi que les embouts 7, 8 prévus aux extrémités de la lame pour sa liaison avec les roues. Les dispositifs de liaison sont placés dans une zone évolutive de la lame de manière à bénéficier du non parallélisme de ses faces pour assurer un blocage.

Selon les différents modes de réalisation, montrés aux figures 3, 6 et 7, les embouts 7, 8 forment un boîtier rigide dont les quatre faces déterminent un volume intérieur trapézoédrique. Les petites bases de deux faces opposées sont adjacentes aux grandes bases des deux autres faces. Les dimensions des trapèzes formant les quatre faces du boîtier correspondent approximativement aux dimensions des faces latérales des extrémités de la lame sur lesquelles l'embout est fixé. Les embouts définissent au moins intérieurement une forme évolutive semblable à celles des extrémités et se bloquent dans une position longitudinale définitive. Ce blocage est obtenu du fait des formes trapézoïdales inversées des faces adjacentes de la lame et de l'embout conjugué.

Les figures 3 et 4 montrent un premier exemple de réalisation d'un embout, selon l'invention, équipant une extrémité d'une lame de suspension 1. Cet embout est prévu pour maintenir un moyen de liaison au support de roue qui est constitué par exemple d'une bague cylindrique 9, servant de palier à un axe monté sur le support de roue.

Afin d'assurer une encoche d'appui pour améliorer la solidarité entre l'extrémité de la lame et la bague 9, ladite extrémité est fraisée selon une surface cylindrique concave dont l'axe se trouve dans le plan de symétrie de l'extrémité, perpendiculaire au plan de la figure 3, et dans laquelle se logera partiellement la bague 9.

L'embout en lui-même se compose d'au moins trois éléments : une enveloppe 10, une armature 11 et un couvercle 12.

L'enveloppe 10 est constituée d'un élément en U à fond rond dont les branches latérales 13, 14 vont en s'élargissant vers leurs extrémités libres 15, 16. Le fond arrondi 17 présente un diamètre correspondant à celui de la bague 9 avec laquelle il coopère. Les branches latérales 13, 14 ont une forme de trapèze isocèle de dimensions approximativement égales à celles des parties de face de la lame sur lesquelles elles viennent se placer.

L'armature 11, de section en U, présente un fond 18 et deux côtés latéraux 19, 20 en forme de trapèze isocèle dont les petites bases 21, 22 des côtés latéraux sont adjacentes à la grande base 23 du fond.

Les bords 24, 25 formant les grandes bases des côtés latéraux, portent des échancrures circulaires 26, 27 coaxiales dont le rayon correspond au rayon extérieur de la bague cylindrique 9 et sur laquelle elles sont soudées.

Les dimensions intérieures de l'armature sont fonction des dimensions de l'extrémité de la lame et tiennent compte des côtés maximales que peuvent avoir les lames produites en série. Le volume trapézoédrique défini entre les parois du boîtier correspond au profil de l'extrémité de la lame.

Les hauteurs des côtés de l'armature 11, correspondant aux grandes bases 24, 25 et petites bases 21, 22 des trapèzes qui forment lesdits côtés, sont prévues telles qu'elles permettent de loger la lame 1, les deux épaisseurs de l'enveloppe 10 et le couvercle 12.

Le couvercle 12 est en forme de trapèze isocèle et est susceptible de s'emboîter entre les côtés latéraux 19, 20 de l'armature 11. Selon la forme de réalisation représentée, le couvercle à une section en U. Les côtés latéraux 29, 30 portés par le fond 28 viennent à ras des bords des côtés 19, 20 de l'armature et sont solidarisés sur toute leur longueur, par exemple par une soudure 31, où les côtés de l'armature sont plus hauts que les côtés du couvercle et sont solidarisés par sertissage.

Selon une forme de réalisation non représentée, les côtés de l'armature ainsi que ceux du couver-

cle sont des trapèzes rectangles.

L'enveloppe 10 porte, sur au moins une des extrémités 15, 16 de ses branches latérales 13 ou 14, un rebord préformé 32, 33 qui vient buter contre l'extrémité libre 23 ou 34 de l'armature 11 ou du couvercle 12. L'autre branche de l'enveloppe est suffisamment longue pour permettre sa prise et son rabattement contre l'extrémité 34 ou 23 du couvercle ou de l'armature.

Les modes de réalisation ci-dessus décrits dans lequel la solidarisation de l'armature et du couvercle pour former un boîtier est faite sur des bords éloignés de la lame en composite permet de choisir les hauteurs des côtés du boîtier et du couvercle de manière à éviter tout risque de détérioration de l'extrémité de la lame enchâssée dans le boîtier.

Afin de permettre la compensation des variations de dimensions de la lame, et d'en augmenter la résistance, des orifices d'injection 35 sont prévus dans les différentes pièces pour l'injection de résine synthétique qui viendra occuper les interstices pouvant exister entre la lame et le boîtier. La pénétration et le cheminement de la résine, entre l'enveloppe 10 et la lame 1 sont facilités par l'interposition de cales (non représentées) formées par des fils métalliques fins.

La pose de l'embout à l'extrémité d'une lame de suspension en composite s'opère de la manière suivante :

L'embout, selon la première forme de réalisation se présente sous l'aspect de deux pièces : une première pièce comprenant l'armature 11 à l'extrémité de laquelle est soudée la bague 9, autour de laquelle est fixée l'enveloppe 10, une de ses parties trapézoïdales 13 étant placée dans le fond 18 de l'armature contre le bord 23 auquel s'accroche le rebord 32 et une deuxième pièce constituée du couvercle 12.

On introduit la première pièce sur l'extrémité de la lame dans laquelle a été fraisé préalablement le logement pour la bague 9. On rabat sur la lame la deuxième partie trapézoïdale 14 de l'enveloppe. On place ensuite entre les côtés 19, 20 de l'armature, le couvercle 12 contre l'enveloppe de manière que ses côtés soient dans le même sens que ceux du boîtier. On presse le couvercle et l'enveloppe contre la lame, le rebord 33 de la partie 14 de l'enveloppe vient alors s'accrocher sur le bord 34 du couvercle. On réunit par un moyen approprié (soudure, sertissage, etc) les bords longitudinaux voisins du boîtier et du couvercle.

L'embout, selon la deuxième forme de réalisation est composée de trois pièces, une première pièce formée par l'armature 11 à l'extrémité duquel est soudée la bague 9 ; une deuxième pièce constituée de l'enveloppe 10 dont un seul des bords 15 porte un rebord 32 et une troisième pièce constituée du couvercle 12.

On place la partie 13 de l'enveloppe 10 dans le fond 18 de l'armature, le rebord 32 étant maintenu par le bord 23 de l'armature.

On introduit dans l'ensemble l'extrémité de la lame. On replie sur la lame, après avoir intercalé des cales, la partie libre 14 de l'enveloppe et l'on place entre les côtés 19, 20 du boîtier et sur la partie 14 de l'enveloppe le couvercle de manière que les bords soient dans le mémé sens que ceux de l'armature. Le couvercle est maintenu et solidarisé à l'armature selon une des méthodes décrites dans la réalisation précédente. On saisit l'extrémité 16 de l'enveloppe dépassant de l'armature et du couvercle avec un outil de traction approprié et l'on replie ladite extrémité contre le bord du couvercle pour former le rebord 33. On peut éventuellement solidariser ponctuellement l'enveloppe avec la bague, comme indiqué aux figures 3 et 4.

Lorsque la mise en place et les soudures ont été exécutées, on procède éventuellement dans les deux cas à l'injection, dans l'embout, de résine synthétique par les orifices d'injection 35.

Il est à remarquer que l'embout formant un boîtier est autobloquant c'est-à-dire qu'il est automatiquement immobilisé au moins dans le sens longitudinal de la lame par suite de leurs profils correspondants.

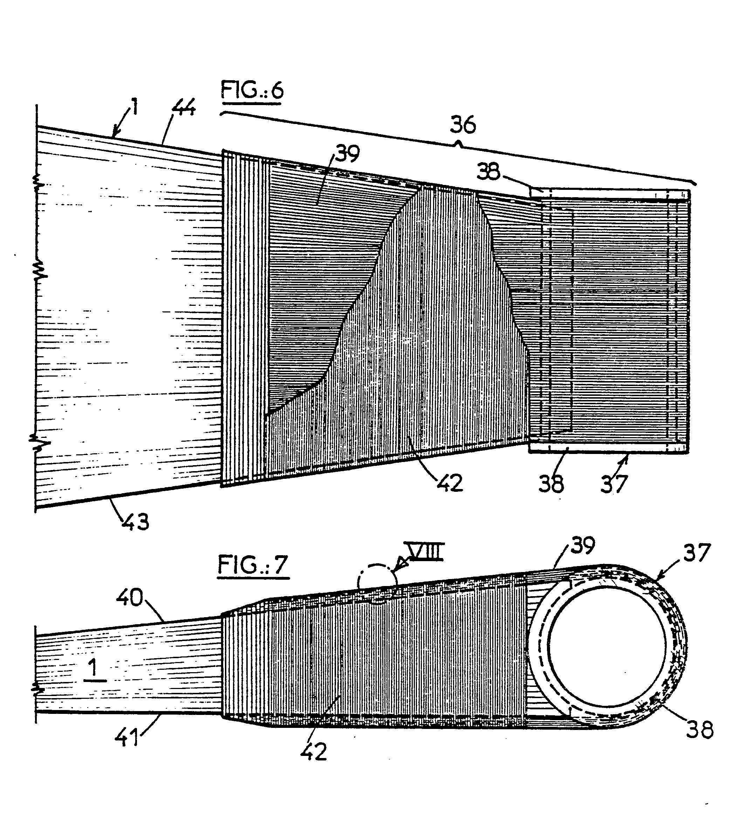

Les figures 6, 7, 8 montrent une deuxième forme de réalisation d'une lame avec embouts, selon l'invention.

Comme dans la réalisation précédente, l'extrémité de la lame de suspension 1 est munie d'un embout 36 prévu pour maintenir un moyen de liaison au support de roue. Ce moyen de liaison est une bague cylindrique 37.

La bague 37 porte à ses extrémités deux collerettes 38 et est logée partiellement selon une génératrice dans une cavité cylindrique fraisée à l'extrémité de la lame et dont l'axe est dans le plan horizontal de symétrie. La bague est maintenue dès avant dans son logement cylindrique par collage.

Le boîtier constituant l'embout est formé in situ en matériau composite par des couches croisées de nappe ou tissu de fibre. La ou les premières couches 39 sont disposées dans le sens longitudinal sur les faces supérieure 40 et inférieure 41 de la lame et passent sur la bague 37 pour former une enveloppe. Une ou plusieurs autres couches 42 sont posées dans le sens transversal et forment, comme dans l'exemple des figures 3 et 4, une armature et un couvercle solidaires autour des bords latéraux 43, 44 de la lame et des extrémités de l'enveloppe, formées par les couches 39, chaque couche étant enduite de résine.

La couche est réalisée sous forme de bande constituée de mèches de fibres de verre parallèles, continues, maintenues par un fil de trame lâche. La bande ainsi formée autorise l'écartement uniforme des mèches dans des limites relativement grandes permettant d'adapter la largeur de la bande à la largeur de la surface sur laquelle elle doit être fixée. La bande de mèches permet donc de couvrir les faces trapézoïdales supérieure et inférieure de l'extrémité de la lame en conservant le même nombre de fibres pour entourer la bague. Les efforts que supporte la bague sont ainsi intégralement transmis sur toute la largeur de la lame.

Après avoir placé deux couches 39 de bande dans le sens longitudinal, on dispose une couche 42 dans le sens transversal.

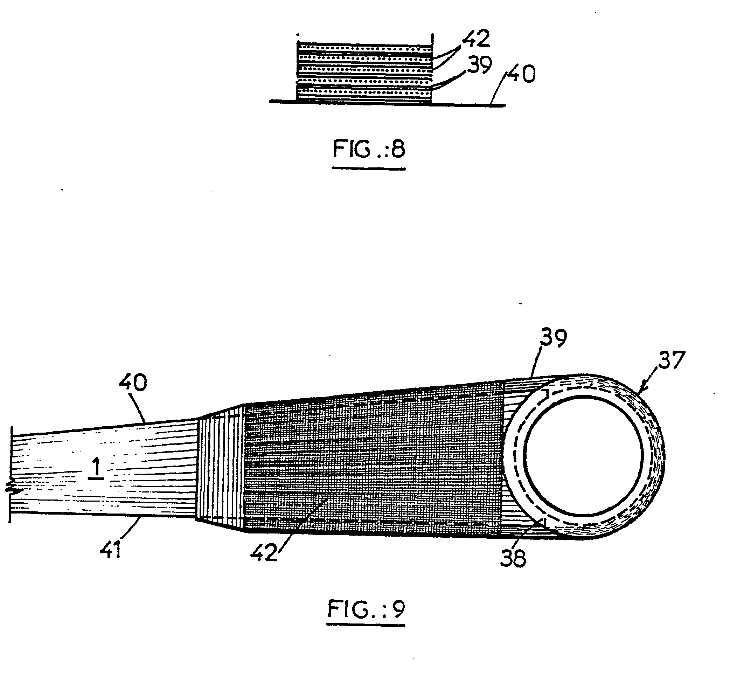

Dans l'exemple de réalisation de la figure 6 la couche 42 dans le sens travers est formée d'une bande à fibres unidirectionnelles dont la direction des fibres fait approximativement un angle droit avec celle de la couche 39 dans le sens long, et on l'imprègne de résine. On continue ainsi la succession deux couches 39 dans le sens long, une couche 42 dans le sens travers comme le montre la partie en coupe VIII de la figure 7 représentée figure 8. Les pièces de tissu destinées à former les couches sens travers sont coupées de manière que leurs bords voisins ne forment pas de surépaisseur.

Dans l'exemple représenté, l'embout-boîtier en composite, formé in situ, est constitué de dix couches 39 de tissu sens long et de cinq couches 42 de tissu sens travers.

L'embout est donc formé sur les faces supérieure 40 et inférieure 41 des extrémités de la lame par des couches croisées à 90° et sur les faces latérales 43 et 44 uniquement par des couches transversales par rapport à la direction des fibres de la lame.

Selon une autre forme de réalisation et en cas d'efforts de cisaillement non négligeables dans le sens axial de la bague, la bande à fibres unidirectionnelles formant les couches 42 en sens travers, est remplacée par un tissu dont les fils sont croisés. Les fibres sont alors orientées selon un angle donné par rapport à l'axe de symétrie horizontal de la lame afin de reprendre les efforts (figure 9).

L'armure de ce tissu peut présenter des variantes ou des rythmes différents adaptés à la reprise des efforts qui s'exercent dans les couches 39 en sens long. De préférence, on utilise un tissu à armure toile ou sergé croisé.

Le terme tissu est pris dans le sens le plus large à savoir :

pour le recouvrement dans le sens longitudinal de bande à fibres unidirectionnelles ;

pour le recouvrement dans le sens transversal de mèche ou de bande à fibres unidirectionnelles de tissu à armure de toile ou de sergé croisé.

La couche avec la mèche de fibres unidirectionnelles est formée par bobinage à spires jointives.

L'enrobage par les couches 42 travers est limité vers l'extrémité de la lame aux bords des collerettes 38 et la largeur des pièces de tissu des couches travers 42 décroît, de manière à former avec les couches 39 en long de longueur décroissante, un raccordement progressif avec les surfaces de la lame.

Les couches 39 en long maintiennent la bague 37 dans l'extrémité de la lame fraisée à cet effet, et sont maintenues transversalement et au moins pendant la phase de fabrication de l'embout par les collerettes 38, qui, lors de l'utilisation participent avec le collage à la reprise des efforts parallèles à l'axe de la bague 37.

Il est évident que le nombre des couches ainsi que leur succession peuvent varier sans pour autant sortir du cadre de l'invention.

L'invention n'est pas limitée aux exemples de réalisation décrits mais couvre également les équivalents techniques ayant pour objet une lame de suspension munis d'embouts présentant un volume intérieur trapézoédrique conjugué des parties d'extrémité de la lame évitant tout déplacement longitudinal par la forme trapézoïdale des côtés opposés et l'inversion de l'obliquité de deux côtés adjacents.

## Revendications

1. Lame élastique de suspension d'un véhicule comportant à ses extrémités des embouts munie de moyens de liaison aux roues, ladite lame étant constituée en un matériau composite à fibres longitudinales, s'étendant sans coupure d'un bout à l'autre, présentant au moins à ses extrémités un profil évolutif de section approximativement constante dont la largeur diminue de manière concomittante avec une augmentation d'épaisseur, caractérisée en ce que chacun des embouts (7, 8) comprend, en combinaison, (a) une bague cylindrique (9 ; 37) encastrée dans une encoche cylindrique concave formée à l'extrémité adjacente de la lame, pour relier ladite lame à une roue, l'axe de la bague étant perpendiculaire au plan de flexion de la lame, (b) une enveloppe (10 ; 39) en forme de U pour maintenir la bague dans l'encoche cylindrique concave, cette enveloppe présentant des branches (13, 14) qui s'élargissent vers leur extrémité libre et qui sont appliquées sur les portions de forme correspondante des faces opposées de la lame, au voisinage d'une extrémité de celle-ci, et (c) un boîtier rigide (11, 12 ; 39, 42) à quatre côtés définissant un volume intérieur trapézoïdal, les petites bases de deux côtés opposés étant adjacentes aux grandes bases des deux autres côtés, et ledit volume intérieur étant complémentaire de celui de l'extrémité de la lame, les branches latérales de l'enveloppe (10 ; 39) en forme de U étant retenues par ce boîtier de manière à être immobilisées longitudinalement sur la lame avec le boîtier.

2. Lame selon la revendication 1, caractérisée en ce que le boîtier rigide comprend une armature (11) en forme de U comprenant un fond (18) et deux côtés latéraux (19, 20) en forme de trapèze dont les petites bases (21, 22) sont adjacentes à la grande base (23) du fond (18) et un couvercle (12) en forme de trapèze, ledit couvercle étant conformé pour s'emboîter entre les côtés latéraux de l'armature (11).

3. Lame selon la revendication 2, caractérisée en ce que le bord d'une extrémité libre (15, 16) d'une branche latérale de l'enveloppe (10) présente un rebord (32, 33) susceptible de buter contre l'extrémité libre (23, 34) de l'armature (11) et/ou du couvercle (12), le fond du U enserrant la bague cylindrique (9), une au moins des branches de l'enveloppe étant disposée contre la lame entre le fond (18) de l'armature et/ou le couvercle (12).

4. Lame selon la revendication 3, caractérisée en ce que la bague cylindrique (9) est solidarisée au moins partiellement avec le fond de l'enveloppe en U (10).

5. Lame selon la revendication 3, caractérisée en ce qu'une des branches latérales (13, 14) de l'enveloppe (10) est solidaire du fond (18) de l'armature ou du couvercle (12).

6. Lame selon la revendication 3, caractérisé en ce que le couvercle a une forme en U et présente un fond (18) et deux côtés latéraux (29, 30) en forme de trapèze, ledit couvercle étant susceptible de s'emboîter entre les côtés latéraux (19, 20) de l'armature (11).

7. Lame selon la revendication 3, caractérisée en ce que le bord de la deuxième extrémité libre (16, 15) de l'enveloppe (10) présente un rebord (33, 32) susceptible de buter contre l'extrémité libre (34, 23) du couvercle (12) et/ou de l'armature (11).

8. Lame selon la revendication 3, caractérisée en ce que les bords longitudinaux des côtés (19, 20) de l'armature (11) et ceux des côtés (30, 31) du couvercle (12) sont solidarisés par soudure.

9. Lame selon la revendication 3, caractérisée en ce que les bords longitudinaux des côtés (19, 20) de l'armature (11) et ceux des côtés (30, 31) du couvercle (12) sont solidarisés par sertissage.

10. Lame selon la revendication 3, caractérisée en ce que le fond (18, 28) et les côtés latéraux (19, 20, 29, 30) de l'armature et du couvercle ainsi que les branches latérales (13, 14) de l'enveloppe (12) portent des orifices (35) d'injection.

11. Lame selon la revendication 3, caractérisée en ce que des cales sont prévues entre l'enveloppe (10) et la lame (1).

12. Lame selon la revendication 3, caractérisée en ce que la deuxième extrémité libre (15, 16) de l'enveloppe (10) est tirée et rabattue contre le bord du couvercle et/ou l'armature pour former un rebord (33).

13. Lame selon la revendication 1, caractérisée en ce que chaque embout est constitué de couches indépendantes, superposées et croisées, de fibres enrobées de résine synthétique polymérisée in situ, au moins une première couche (39) formant une bande, disposée dans le sens longitudinal de la lame, sur les parties d'extrémité des deux faces longitudinales opposées (40, 41) tangentes à la bague (37) et autour de la bague (37), lesdites faces (40, 41) et bague (37) étant entièrement recouvertes, et une autre couche (42) disposée dans le sens transversal de la lame et recouvrant les extrémités de la ou des premières couches et les parties d'extrémité des deux autres faces longitudinales opposées (43, 44) de la lame, de manière que les couches recouvrent étroitement les parties d'extrémité des faces longitudinales de la lame pour maintenir la bague dans son logement contre les effets d'arrachement ou de délaminage susceptibles de se produire entre la lame et la bague.

14. Lame selon la revendication 13, caractérisé en ce que la bande formant au moins la première couche comprend des fibres travaillantes longitudinales éventuellement maintenues par des fils transversaux permettant leur écartement.

15. Lame selon les revendications 13 ou 14, caractérisé en ce qu'au moins une couche disposée dans le sens transversal de la lame est formée de fibres ou mèches travaillantes bobinées à spires jointives.

16. Lame selon la revendication 13, caractérisé en ce que chaque couche est plus courte que la précédente par rapport à l'extrémité de la lame.

17. Lame selon la revendication 13, caractérisé en ce que la bague (37) porte à ses extrémités des collerettes (38) entre lesquelles sont maintenues les couches (39) de bandes à fibres unidirectionnelles.

18. Lame selon la revendication 15 ou 16, caractérisé en ce qu'il est constitué de dix couches (39) de bande à fibres unidirectionnelles disposées dans le sens long et de cinq couches (42) de tissu à armure toile et/ou sergé croisé, dans le sens travers, une couche (42) de tissu dans le sens travers étant séparée de la prochaine par deux couches (39) de bande dans le sens long.

**Claims**

1. Elastic vehicle suspension leaf having, at its ends, terminal pieces equipped with means of connection to the wheels, the said leaf consisting of a composite material with longitudinal fibers extending continuously from one end to the other, and having, at least at its ends, an evolute profile of approximately constant cross-section, the width of which decreases concomitantly with an increase in thickness, characterized in that each of the terminal pieces (7, 8) comprises, in combination, (a) a cylindrical ring (9 ; 37) housed in a concave cylindrical recess formed at the adjacent end of the leaf, for connecting said leaf to a wheel, the ring axis being perpendicular to the flexure plane of the leaf, b) a U-shaped casing (10 ; 39) for maintaining the ring in the concave cylindrical recess, the casing having branches (13, 14) which widen towards their free end and which are applied on the portions of corresponding shape of opposite side of the leaf, near an end of said leaf, and (c) a rigid housing (11, 12 ; 39, 42) having four sides defining a trapezoidal inner volume, the short bases of two opposite sides being adjacent to the long bases of the two other sides, and said inner volume being complementary of the one of the leaf and, the side branches of the U-shaped casing (10 ; 39) being held by said housing so as to be fixed longitudinally on the leaf together with the housing.

2. Leaf according to claim 1, characterized in that the rigid housing comprises a U-shaped framework (11) including a bottom and two trapezoidal lateral sides (19, 20) the short bases (21, 22) of which are adjacent to the long base (23) of bottom (18) and a trapezoidal cover (12), said cover being shaped so as to fit between the lateral sides of the framework (11).

3. Leaf as claimed in claim 2, characterized in that the edge of one free end (15, 16) of a lateral branch of the envelope has a rim (32, 33) capable of butting against the free end (23, 34) of the framework (11) and/or of the cover (12), the bottom of the U gripping the cylindrical ring (9), at least one of the branches of the casing being arranged against the leaf between the bottom (18) of the framework and/or the cover (12).

4. Leaf as claimed in claim 3, characterized in that the cylindrical ring (9) is fixed at least partially to the bottom of the U-shaped casing (10).

5. Leaf as claimed in claim 3, characterized in that one of the lateral branches (13, 14) of the casing (10) is fixed to the bottom (18) of the framework or the cover (12).

6. Leaf as claimed in claim 3, characterized in that the cover is U-shaped and has a bottom (18) and two lateral sides (29, 30) in the form of a trapezium, the said cover being capable of engaging between the lateral sides (19, 20) of the framework (11).

7. Leaf as claimed in claim 3, characterized in that the edge of the second free and (16, 15) of the casing (10) has a rim (33, 32) capable of butting against the free end (34, 23) of the cover (12) and/or of the framework (11).

8. Leaf as claimed in claim 3, characterized in that the longitudinal edges of the sides (19, 20) of the framework (11) and those of the sides (30, 31) of the cover (12) are fixed to one another by means of welding.

9. Leaf as claimed in claim 3, characterized in that the longitudinal edges of the sides (19, 20) of the framework (11) and those of the sides (30, 31) of the cover (12) are fixed to one another by means of crimping.

10. Leaf as claimed in claim 3, characterized in that the bottom (18, 28) and the lateral sides (19, 20, 29, 30) of the framework and of the cover and the lateral branches (13, 14) of the casing (12) have injection orifices (35).

11. Leaf as claimed in claim 3, characterized in that wedges are provided between the casing (10) and the leaf (1).

12. Leaf as claimed in claim 3, characterized in that the second free end (15, 16) of the casing (10) is pulled and turned down against the edge of the cover and/or of the framework in order to form a rim (33).

13. Leaf according to claim 1, characterized in that each terminal piece is made of superimposed and crossed independent layers of fibers impregnated with a polymeric resin polymerized in situ, at least a first layer (39) forming a web arranged longitudinally with respect to the leaf, over end portions of two opposite longitudinal sides (40, 41) thereof tangent to ring (37) and over ring (37), said sides (40, 41) and ring (37) being completely covered, and another layer (42) arranged transversally with respect to the leaf and covering the ends of the first layer (s) and the end portions of the two other opposite longitudinal sides (43, 44) of the leaf, so that the layers tightly cover the end portions of the longitudinal sides of the leaf for holding the ring in its recess against tearing or delaminating effects which might happen between the leaf and the ring.

14. Leaf according to claim 13, characterized in that the web forming at least the first layer comprises longitudinal working fibers possibly held by transverse threads permitting their spacing.

15. Leaf according to claims 13 or 14, characterized in that at least a layer arranged transversally with respect to the leaf is formed of working fibers or strands wound in close turns.

16. Leaf according to claim 13, characterized in that each layer is shorter than the former one with respect to the leaf end.

17. Leaf as claimed in claim 13, characterized in that ring (37) carries, at its ends, collars (38), between which the layers (39) consisting of a strip of unidirectional fibers are retained.

18. Leaf as claimed in claim 15 or 16, characterized in that the terminal piece comprises ten layers (39) consisting of a strip of unidirectional fibers arranged in a longitudinal direction and of five layers (42) of fabric with a plain weave and/or a crossed-serge weave, in the transverse direction, one transverse fabric layer (42) being separated from the next by two longitudinal strip layers (39).

## Patentansprüche

1. Blattfeder für eine Fahrzeugaufhängung, welche zu ihren Enden hin Endstücke mit Mitteln zur Verbindung mit den Rädern aufweist und welche aus einem Verbundkörper mit Längsfasern besteht, die sich ohne Unterbrechung von einem Ende zum anderen erstrecken, wobei die Feder zumindest an den Enden ein sich erweiterndes Profil hat, dessen Querschnitt im wesentlichen konstant ist, indem die Breite bei zunehmender Dicke abnimmt, dadurch gekennzeichnet, daß jedes Endstück (7, 8) kombiniert aufweist :

(a) eine zylindrische Hülse (9 ; 37), die von einer hohlzylindrischen Ausnehmung am benachbarten Feder-Ende zwecks Verbindung der Feder mit einem Rad umschlossen ist,

(b) einen U-förmigen Mantel (10 ; 39), der die Hülse in der hohlzylindrischen Ausnehmung haltert und Schenkel (13, 14) hat, welche sich zu ihrem freien Ende hin erweitern und welche nahe einem Ende der Feder an deren zugeordnete, einander gegenüberliegende Abschnitte formschlüssig anschließt, sowie

(c) ein starres Gehäuse (11, 12 ; 39, 42) mit vier Flächen, welche einen trapezoidförmigen Innenraum begrenzen, wobei die Schmalkanten bzw.-seiten von zwei einander gegenüberliegenden Flächen jeweils an die Breitkanten bzw. -seiten der beiden anderen Flächen anschließen und wobei der Innenraum gegengleich zur Form des Feder-Endes ist, und

daß die Seitenschenkel des U-förmigen Mantels (10 ; 39) von dem Gehäuse so gehalten sind, daß sie zusammen mit letzterem auf der Feder in Längsrichtung festgelegt sind.

2. Feder nach Anspruch 1, dadurch gekennzeichnet, daß das starre Gehäuse einen U-förmigen Beschlag (11) mit einem Boden (18) und mit zwei Seitenwänden (19, 20) in Form eines Trapezes, dessen Schmalseiten (21, 22) an die Breitseite (23) des Bodens (18) anschließen, und eine trapezförmige Abdeckung (12) hat, welche zur Einpassung zwischen den Seitenwänden des Beschlags (11) ausgebildet ist.

3. Feder nach Anspruch 2, dadurch gekennzeichnet, daß der Rand des einen freien Endes (15, 16) eines Seitenschenkels des Mantels (10) eine Aufbiegung (32, 33) aufweist, die an dem freien Ende (23, 34) des Beschlags (11) und/oder der Abdeckung (12) zur Anlage kommt, wobei die U-förmige Innenfläche die zylindrische Hülse (9) umspannt und wobei zumindest einer der Mantelschenkel an der Feder zwischen dem Beschlagboden (18) und/oder der Abdeckung (12) anliegt.

4. Feder nach Anspruch 3, dadurch gekennzeichnet, daß die zylindrische Hülse (9) zumindest teilweise mit der Innenfläche des U-förmigen Mantels (10) fest verbunden ist.

5. Feder nach Anspruch 3, dadurch gekennzeichnet, daß einer der Seitenschenkel (13, 14) des Mantels (10) mit dem Boden (18) des Beschlags oder mit der Abdeckung (12) fest verbunden ist.

6. Feder nach Anspruch 3 dadurch gekennzeichnet, daß die Abdeckung U-förmig ist und einen Boden (18) sowie zwei Seitenränder (29, 30) in Trapezform hat, so daß die Abdeckung zur Einpassung zwischen den Seitenwänden des Beschlags (11) ausgebildet ist.

7. Feder nach Anspruch 3, dadurch gekennzeichnet, daß der Rand des anderen freien Endes (16, 15) des Mantels (10) eine Aufbiegung (33, 32) aufweist, die am freien Ende (34, 23) der Abdeckung (12) und/oder des Beschlags (11) zur Anlage kommt.

8. Feder nach Anspruch 3, dadurch gekennzeichnet, daß die Längsränder der Seitenwände. (19, 20) des Beschlags (11) und die Seitenränder (30, 29) der Abdeckung (12) miteinander verschweißt sind.

9. Feder nach Anspruch 3, dadurch gekennzeichnet, daß die Längsränder der Seitenwände (19, 20) des Beschlags (11) und die Seitenränder (30, 29) der Abdeckung (12) miteinander quetschverbunden bzw. verbördelt sind.

10. Feder nach Anspruch 3, dadurch gekennzeichnet, daß der Boden (18, 28) und die Seitenwände bzw.-ränder (19, 20 ; 29, 30) des Beschlags und der Abdeckung sowie die Seitenschenkel (13, 14) des Mantels (10) Einspritzöffnungen (35) aufweisen.

11. Feder nach Anspruch 3, dadurch gekennzeichnet, daß zwischen dem Mantel (10) und der Feder (1) Füllstücke bzw. Beilagen vorgesehen sind.

12. Feder nach Anspruch 3, dadurch gekennzeichnet, daß das zweite freie Ende (15, 16) des Mantels (10) zur Bildung einer Aufbiegung (33) ausgezogen und gegen den Rand des Deckels und/oder des Beschlags umgelegt ist.

13. Feder nach Anspruch 1, dadurch gekennzeichnet, daß jedes Endstück aus einzelnen, gekreuzt überlagerten Schichten mit Fasern besteht, die in situ in polymerisiertes Kunstharz eingebettet sind, wobei zumindest eine erste Schicht (39) die Form eines Bandes hat und in Längsrichtung der Feder auf den Endabschnitten der beiden einander gegenüberliegenden Längsflächen (40), welche an der Hülse (37) anliegen und um sie herumgeführt sind, derart angeordnet ist, daß diese Flächen (40, 41) und die Hülse (37) vollständig überdeckt sind, und wobei eine weitere Schicht (42) in Querrichtung der Feder unter Überdeckung der freien Enden der ersten Schicht bzw. Schichten sowie der Endabschnitte der beiden anderen einander gegenüberliegenden Längsflächen (43, 44) der Feder so angeordnet ist, daß die Schichten die Endabschnitte der Feder-Längsflächen knapp überdecken, so daß die Hülse in ihrem Sitz gegen Reiß- oder Schichtspalt-Einwirkungen gehalten ist, welche zwischen der Feder und der Hülse auftreten können.

14. Feder nach Anspruch 13, dadurch gekennzeichnet, daß das Band, welches zumindest die erste Schicht bildet, in Längsrichtung wirksame Fasern aufweist, die gegebenenfalls durch Querfasern abstandsveränderlich gehalten sind.

15. Feder nach Anspruch 13 oder 14, dadurch gekennzeichnet, daß zumindest eine in Querrichtung der Feder angeordnete Schicht aus Fasern oder Garnen bzw. Dochten besteht, die nach Art von Spulen mit aneinanderliegenden Windungen wirksam sind.

16. Feder nach Anspruch 13, dadurch gekennzeichnet, daß jede Schicht kürzer als die vorhergehende ist, bezogen auf das Feder-Ende.

17. Feder nach Anspruch 13, dadurch gekennzeichnet, daß die Hülse (37) an ihren Enden Kragen (38) aufweist, zwischen denen die aus Fasern einer Richtung bestehenden Bänder gehalten sind.

18. Feder nach Anspruch 16 oder 17 dadurch gekennzeichnet, daß es aus zehn Schichten (39) von Bändern, die längsangeordnete Fasern einer Richtung aufweisen, sowie aus fünf Schichten (42) von in Querrichtung mit Leinwand- und/oder Köperbindung angeordnetem Gewebe besteht, wobei eine in Querrichtung angeordnete Gewebeschicht (42) von der nächsten durch zwei Schichten (39) mit in Längsrichtung angeordneten Bändern getrennt ist.

FIG.:1

FIG.:2

FIG.:3

FIG.:4

FIG.:5

## FIG.:6

1   44   36
39
38
42   38   37
43

## FIG.:7

VIII
40
39   37
1
38
41   42

FIG.:8

FIG.:9